# EUROPEAN PATENT SPECIFICATION

(11) **EP 4 180 566 B1**
(45) Date of publication and mention of the grant of the patent: **23.04.2025**
(21) Application number: 21793777.0
(22) Date of filing: 05.07.2021
(51) Int. Cl.: D06F 58/22, D06F 58/45, D06F 58/10, D06F 25/00, D06F 105/34, D06F 103/42, D06F 103/30

(54) **FILTRATION MESH CLEANING METHOD, APPARATUS, CLOTHES WASHING MACHINE, AND STORAGE MEDIUM**
FILTERNETZREINIGUNGSVERFAHREN, VORRICHTUNG, WASCHMASCHINE UND SPEICHERMEDIUM
PROCÉDÉ DE NETTOYAGE D'UNE TOILE FILTRANTE, APPAREIL, LAVE-LINGE ET SUPPORT DE STOCKAGE

(30) Priority: 07.07.2020 CN 202010645224
(43) Date of publication of application: 17.05.2023
(73) Proprietor: Chongqing Haier Roller Washing Machine Co., Ltd., Chongqing 400026 (CN); Haier Smart Home Co., Ltd., Qingdao, Shandong 266101 (CN)
(72) Inventor: LIU, Kai, Qingdao, Shandong 266101 (CN); HOU, Yongshun, Qingdao, Shandong 266101 (CN); ZHOU, Fangzheng, Qingdao, Shandong 266101 (CN)
(74) Representative: Barker Brettell LLP
(86) International application number: PCT/CN2021/104500
(87) International publication number: WO 2021/213556

(56) References cited:
- WO-A2-2011/139097
- CN-A- 104 562 606
- CN-A- 109 750 471
- CN-A- 110 565 347
- CN-A- 110 592 910
- CN-A- 110 592 910
- CN-A- 111 218 793
- CN-U- 201 873 878
- CN-U- 209 997 342
- DE-A1- 102006 007 442
- KR-A- 20130 039 811

## Description

### TECHNICAL FIELD

Embodiments of the present invention relate to the technical field of household appliances, and in particular, relates to a method for filter screen cleaning, an apparatus, a washing machine, and a storage medium.

### BACKGROUND

With the popularity of washing machines, more and more people use the washing machines to clean the clothes, which brings a lot of convenience to people's life. For an existing washing machine with a drying function, the drying performance may be affected in the drying stage, since the lint generated from the clothes in the cleaning stage will be circulated in the whole system along with the hot drying air and possibly enter the drying system to result in the accumulation of the lint over time.

In order to eliminate the influence of the lint, a filtering structure, such as a filter screen, is usually provided in the drying system, and the lint is collected by the filter screen, so that the lint is prevented from entering the drying system. However, the lint may be accumulated on the filter screen, and thus the user is required to clean the filtering structure regularly, for example, the user is required to detach the filter screen for cleaning and then reinstall the filtering structure.

The existing filter screen cleaning method is complex in filter screen dismounting and cleaning processes, which brings inconvenience to the user; moreover, if the user forgets to clean or does not clean in time, the whole drying period will be prolonged, energy consumption will increase, and the service life of the product will be seriously influenced.

CN104562606A discloses a method for determining clogging of a thread residue filter of a clothes dryer, where pressures at the front and/or the back of the thread residue filter are detected after a drying program operation has started, a clogging degree of the thread residue filter is determined by a change of the pressures and feeds back to a user to prompt the user to clean the thread residue filter.

### SUMMARY

The embodiments of the present invention provide a method for filter screen cleaning, an apparatus, a washing machine and a storage medium, so as to achieve automatic cleaning of the filter screen.

In a first aspect of an embodiment of the present invention, provided is a method for filter screen cleaning. The method is applied to a washing machine equipped with a drying apparatus, an air intake side of the drying apparatus is provided with a filter screen, a respective air pressure sensor is provided on either side of the filter screen, and a side of the filter screen facing towards the air intake side is provided with a filter screen cleaning component, and the method includes:
detecting, by the air pressure sensor, an air pressure on either side of the filter screen during an air intake process of the drying apparatus, and obtaining a pressure difference according to air pressures on either sides of the filter screen; and
starting the filter screen cleaning component to clean the filter screen, if the pressure difference is greater than a preset threshold.

In a possible implementation, the filter screen cleaning component includes a brush, a slide rail, a driving motor and spray nozzles, where the brush is provided on the slide rail, the driving motor is configured to drive the brush to move and/or the slide rail to move, and there are multiple spray nozzles and the spray nozzles are configured such that they face different areas of the filter screen respectively,
the starting the filter screen cleaning component to clean the filter screen includes:
controlling the driving motor to drive the brush and/or the slide rail to move, so that the brush cleans respective positions of the filter screen in sequence; and
controlling a spray nozzle corresponding to a region where the brush is located at a current cleaning position to spray water, so as to flush the region where the brush is located at the current cleaning position.

In a possible implementation, the filter screen cleaning component further includes: a drain line which is connected to a drain pipe of the washing machine, and configured to discharge sewage after the filter screen is flushed.

In a possible implementation, the method further includes:
after the filter screen is cleaned once, re-controlling air intake of the drying apparatus, detecting, by the air pressure sensor, an air pressure on either side of the filter screen, and obtaining a pressure difference according to air pressures on either sides of the filter screen; and
if the pressure difference is greater than the preset threshold, restarting the filter screen cleaning component to clean the filter screen; or
if the pressure difference is not greater than the preset threshold, ending the cleaning of the filter screen.

In a possible implementation, the detecting, by the air pressure sensor, the air pressure on either side of the filter screen during the air intake process of the drying apparatus includes:
after a user sets a cleaning procedure and a drying procedure, controlling air intake of the drying apparatus before a rinse stage or a drain stage of the cleaning procedure, and detecting, by the air pressure sensor, the air pressure on either side of the filter screen, and
the starting the filter screen cleaning component to clean the filter screen includes:
   in the rinse stage or the drain stage of the cleaning procedure, starting the filter screen cleaning component to clean the filter screen, where the sewage after the filter screen is flushed is discharged from the drain line.

In a possible implementation, the detecting, by the air pressure sensor, the air pressure on either side of the filter screen during the air intake process of the drying apparatus includes:
after a user sets a drying procedure, detecting, by the air pressure sensor, the air pressure on either side of the filter screen during an air intake stage of the drying procedure, and
the starting the filter screen cleaning component to clean the filter screen includes:
after completion of the drying procedure or in a rinse stage or a drain stage of a next cleaning procedure, starting the filter screen cleaning component to clean the filter screen, where the sewage after the filter screen is flushed is discharged from the drain line.

In a possible implementation, the detecting, by the air pressure sensor, the air pressure on either side of the filter screen during the air intake process of the drying apparatus includes:
receiving a cleaning instruction of the filter screen from a user, controlling air intake of the drying apparatus according to the cleaning instruction, and detecting, by the air pressure sensor, the air pressure on either side of the filter screen, and
after completion of the cleaning of filter screen, the method further includes:
   controlling air intake of the drying apparatus, so as to air-dry the filter screen.

In a second aspect of an embodiment of the present invention, provided is a control apparatus for filter screen cleaning. The apparatus is applied to a washing machine equipped with a drying apparatus, an air intake side of the drying apparatus is provided with a filter screen, a respective air pressure sensor is provided on either side of the filter screen, and a side of the filter screen facing towards the air intake side is provided with a filter screen cleaning component, and the apparatus includes:
a detecting module, configured to detect an air pressure on either side of the filter screen via the air pressure sensor during an air intake process of the drying apparatus, and obtain a pressure difference according to air pressures on either sides of the filter screen; and
a controlling module, configured to start the filter screen cleaning component to clean the filter screen, if the pressure difference is greater than a preset threshold.

In a possible implementation, the filter screen cleaning component includes a brush, a slide rail, a driving motor and spray nozzles, where the brush is provided on the slide rail, the driving motor is configured to drive the brush to move and/or the slide rail to move, and there are multiple spray nozzles and the spray nozzles are configured such that they face different areas of the filter screen respectively,
the controlling module, when starting the filter screen cleaning component to clean the filter screen, is configured to:
control the driving motor to drive the brush and/or the slide rail to move, so that the brush cleans respective positions of the filter screen in sequence; and
control a spray nozzle corresponding to a region where the brush is located at a current cleaning position to spray water, so as to flush the region where the brush is located at the current cleaning position.

In a possible implementation, the filter screen cleaning component further includes: a drain line which is connected to a drain pipe of the washing machine, and configured to discharge sewage after the filter screen is flushed.

In a possible implementation, the controlling module is further configured to:
after the filter screen is cleaned once, re-control air intake of the drying apparatus, control the detecting module to detect an air pressure on either side of the filter screen via the air pressure sensor and to obtain a pressure difference according to air pressures on either sides of the filter screen; and
if the pressure difference is greater than the preset threshold, restart the filter screen cleaning component to clean the filter screen; or
if the pressure difference is not greater than the preset threshold, end the cleaning of the filter screen.

In a possible implementation, the detecting module, when detecting the air pressure on either side of the filter screen via the air pressure sensor during the air intake process of the drying apparatus, is configured to:
after a user sets a cleaning procedure and a drying procedure, control air intake of the drying apparatus before a rinse stage or a drain stage of the cleaning procedure, and detect the air pressure on either side of the filter screen via the air pressure sensor, and
the controlling module, when starting the filter screen cleaning component to clean the filter screen, is configured to:
   in the rinse stage or the drain stage of the cleaning procedure, start the filter screen cleaning component to clean the filter screen, where the sewage after the filter screen is flushed is discharged from the drain line.

In a possible implementation, the detecting module, when detecting the air pressure on either side of the filter screen via the air pressure sensor during the air intake process of the drying apparatus, is configured to:
after a user sets a drying procedure, detect the air pressure on either side of the filter screen via the air pressure sensor during an air intake stage of the drying procedure, and
the controlling module, when starting the filter screen cleaning component to clean the filter screen, is configured to:
   after completion of the drying procedure or in a rinse stage or a drain stage of a next cleaning procedure, start the filter screen cleaning component to clean the filter screen, where the sewage after the filter screen is flushed is discharged from the drain line.

In a possible implementation, the detecting module, when detecting the air pressure on either side of the filter screen via the air pressure sensor during the air intake process of the drying apparatus, is configured to:
receive a cleaning instruction of the filter screen from a user, control air intake of the drying apparatus according to the cleaning instruction, and detect the air pressure on either of the filter screen via the air pressure sensor, and
the controlling module, after completion of the cleaning of filter screen, is further configured to:
   control air intake of the drying apparatus, so as to air-dry the filter screen.

In a third aspect of an embodiment of the present invention, provided is a washing machine. The washing machine is equipped with a drying apparatus, an air intake side of the drying apparatus is provided with a filter screen, a respective air pressure sensor is provided on either side of the filter screen, and a side of the filter screen facing towards the air intake side is provided with a filter screen cleaning component, and the washing machine further includes:
a memory configured to store a computer program; and
a processor configured to execute the computer program stored in the memory to implement the method according to the first aspect.

In a fourth aspect of an embodiment of the present invention, provided is a computer-readable storage medium on which a computer program is stored. The computer program, when executed by a processor, implements the method according to the first aspect.

In a fifth aspect of an embodiment of the present invention, provided is a computer program product, including a computer program. The computer program, when executed by a processor, implements the method according to the first aspect.

In a sixth aspect of an embodiment of the present invention, provided is a filter screen cleaning component. The filter screen cleaning component is provided on a side of a filter screen facing towards an air intake side, and is configured to clean the filter screen if a pressure difference obtained according to air pressures on either sides of the filter screen is greater than a preset threshold. The filter screen is provided on the air intake side of a drying apparatus of a washing machine,
the filter screen cleaning component includes a brush, a slide rail, a driving motor and spray nozzles, where the brush is provided on the slide rail,
the driving motor is configured to drive the brush to move and/or the slide rail to move, so that the brush cleans respective positions of the filter screen in sequence, and
there are multiple spray nozzles and the spray nozzles are configured such that they face different areas of the filter screen respectively, and a spray nozzle corresponding to a region where the brush is located at a current cleaning position is configured to flush the region where the brush is located at the current cleaning position.

In a possible implementation, the filter screen cleaning component further includes: a drain line which is connected to a drain pipe of the washing machine, and is configured to discharge sewage after the filter screen is flushed.

In a seventh aspect of an embodiment of the present invention, provided is a drying apparatus. The drying apparatus is provided in a washing machine, an air intake side of the drying apparatus is provided with a filter screen, a respective air pressure sensor is provided on either side of the filter screen, and a side of the filter screen facing towards the air intake side is provided with the filter screen cleaning component according to the six aspect.

According to the method for filter screen cleaning, the apparatus, the washing machine and the storage medium provided in the embodiments of the present invention, during the air intake process of the drying apparatus, the air pressure on either side of the filter screen is detected by the air pressure sensor and the pressure difference is obtained according to the air pressures on either sides of the filter screen. If the pressure difference is greater than the preset threshold, the filter screen cleaning component is started to clean the filter screen. According to the present embodiments, the automatic cleaning of the filter screen can be realized through the filter screen cleaning component. The user does not need to manually disassemble the filter screen or manually clean the filter screen, which brings convenience to the user. In addition, a proper time for cleaning the filter screen can be determined according to the pressure difference between the air pressures on either sides of the filter screen, to avoid generation of impacts on the drying procedure due to excessive accumulation of the lint, thereby effectively improving the drying efficiency, reducing energy consumption and extending the product life.

### BRIEF DESCRIPTION OF DRAWINGS

In order to more clearly illustrate the embodiments of the present application or the technical solutions in the prior art, the drawings needed in the description of the embodiments or the prior art will be briefly described below, it is obvious that the drawings in the following description are only intended for some embodiments of the present application, and for those skilled in the art, other drawings can be obtained according to the drawings without creative efforts.
FIG. 1 is a flow chart of a method for filter screen cleaning according to an embodiment of the present application.
FIG. 2 is a schematic diagram of a drying apparatus of a washing machine according to an embodiment of the present application.
FIG. 3 is a flow chart of a method for filter screen cleaning according to another embodiment of the present application.
FIG. 4 is a structural diagram of a control apparatus for filter screen cleaning according to an embodiment of the present application.
FIG. 5 is a structural diagram of a washing machine according to an embodiment of the present application.

### DETAILED DESCRIPTION OF EMBODIMENTS

The technical solutions in the embodiments of the present application will be clearly and completely described below with reference to the drawings in the embodiments of the present application. It is obvious that the described embodiments are only a part of the embodiments of the present application, and not all of the embodiments. All other embodiments obtained by those skilled in the art based on the embodiments of the present application without any creative efforts shall fall within the protection scope of the embodiments of the present application.

For an existing washing machine with a drying function, the drying performance may be affected in the drying stage, since the lint generated from the clothes in the cleaning stage will be circulated in the whole system along with the hot drying air and possibly enter the drying system to result in the accumulation of the lint over time. In order to eliminate the influence of the lint, a filtering structure, such as a filter screen, is usually provided in the drying system, and the lint is collected by the filter screen, so that the lint is prevented from entering the drying system. However, the lint may be accumulated on the filter screen, and thus the user is required to clean the filtering structure regularly, for example, the user is required to detach the filter screen for cleaning and then reinstall the filtering structure.

The existing filter screen cleaning method requires the user to regularly dismount and clean the filter screen and is complex in the dismounting process and cleaning process, which brings inconvenience to the user; moreover, if the user forgets to clean or does not clean in time, the whole drying period will be prolonged, energy consumption will increase, and the service life of the product will be seriously influenced.

In order to solve the above-described problems, from considerations according to the embodiments of the present application, a filter screen cleaning component should be added in the washing machine to realize automatic cleaning. The user does not need to manually disassemble the filter screen or manually clean the filter screen, which brings convenience to the user.

However, how to trigger the filter screen cleaning component to clean the filter screen needs provision of some sensors to detect the accumulation degree of the lint on the filter screen. According to investigation and simulation tests, it is found that in the drying procedure, a pressure difference exists between air pressures on either sides of the filter screen due to the presence of the lint on the filter screen, and the more the lint accumulation, the greater the pressure difference between the air pressures on either sides of the filter screen. Therefore, in the embodiments of the present application, a respective air pressure sensor is provided on either side of a filter screen; during an air intake process of a drying apparatus, an air pressure on either side of the filter screen is detected by the air pressure sensor and a pressure difference is obtained according to air pressures on either sides of the filter screen; and if the pressure difference is greater than a preset threshold, a filter screen cleaning component is started to clean the filter screen, so that the filter screen can be cleaned at a proper time, to avoid generation of impacts on the drying procedure due to excessive accumulation of the lint, thereby effectively improving the drying efficiency, reducing energy consumption and extending the product life.

The filter screen cleaning process is explained and illustrated in detail below with reference to specific embodiments.

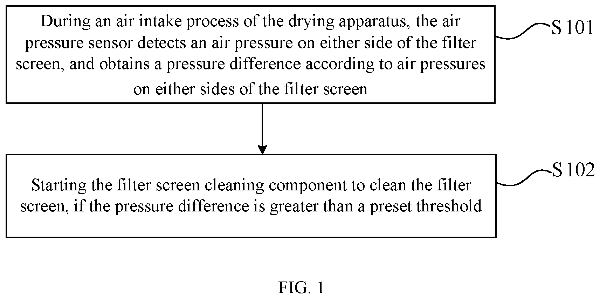

FIG. 1 is a flowchart of a method for filter screen cleaning according to an embodiment of the present application. The present embodiment provides a method for filter screen cleaning. The method is applied to a washing machine equipped with a drying apparatus, an air intake side of the drying apparatus is provided with a filter screen, a respective air pressure sensor is provided on either side of the filter screen, and a side of the filter screen facing towards the air intake side is provided with a filter screen cleaning component. Since the lint of clothes is accumulated on the side of filter screen facing towards the air intake side, the side of the filter screen facing towards the air intake side can be cleaned through the filter screen cleaning component, where the filter screen cleaning component can be any equipment that can achieve the cleaning function, which is not limited here. In addition, the drying apparatus in the present embodiment may further include, but is not limited to, an evaporator, a condenser, and a fan, which are not described in detail herein.

The method for filter screen cleaning provided in the present embodiment specifically includes the following steps.
S101, during an air intake process of a drying apparatus, an air pressure on either side of a filter screen is detected by an air pressure sensor, and a pressure difference is obtained according to air pressures on either sides of the filter screen; and
S102, starting the filter screen cleaning component to clean the filter screen, if the pressure difference is greater than a preset threshold.

In the present embodiment, the filter screen will be blocked to a certain extent when the lint is accumulated on the filter screen, so the air pressures on either sides of the filter screen will be different, and there will be a certain pressure difference, and the more the lint accumulation, the greater the pressure difference between the air pressures on either sides of the filter screen. Therefore, in the present embodiment, an air pressure on either side of the filter screen is detected by a respective air pressure sensor provided on either side of the filter screen, and then a pressure difference is obtained according to air pressures on either sides of the filter screen.

It should be noted that the air pressure sensor may detect the air pressure on either side of the filter screen at any time, for example, detect during the drying procedure, or detect when the user actively chooses to clean the filter screen, or detect during execution of a cleaning procedure after the user selects the cleaning procedure and a drying procedure, or detect at other times, or detect regularly. During the detection, the air intake of the drying apparatus needs to be controlled, for example, the fan in the drying apparatus is controlled to start. Certainly, if the drying apparatus has already been in an air intake state when detecting the air pressure during the drying procedure, the air intake does not need to be controlled separately.

In the present embodiment, it is judged whether the pressure difference between the air pressures on either sides of the filter screen is greater than the preset threshold. When the pressure difference is greater than the preset threshold, it means that the accumulation of the lint on the filter screen has reached a certain level, which will have a negative impact on the drying procedure. The filter screen needs to be cleaned, and the filter screen cleaning component can be controlled to clean the filter screen. The preset threshold can be set according to actual requirements.

It should be noted that, after the pressure difference is determined to be greater than the preset threshold, the filter screen may be cleaned immediately, or may be cleaned until a proper time, for example, when the washing machine is in a rinse stage or a drain stage, the filter screen is cleaned, so as to avoid secondary pollution in the washing machine caused by the cleaned lint.

In the method for filter screen cleaning provided in the present embodiment, during an air intake process of a drying apparatus, an air pressure on either side of a filter screen is detected by an air pressure sensor, and a pressure difference is obtained according to air pressures on either sides of the filter screen. If the pressure difference is greater than a preset threshold, a filter screen cleaning component is started to clean the filter screen. According to the present embodiment, the automatic cleaning of the filter screen can be realized through the filter screen cleaning component. The user does not need to manually disassemble the filter screen or manually clean the filter screen, which brings convenience to the user. In addition, a proper time for cleaning the filter screen can be determined according to the pressure difference between the air pressures on either sides of the filter screen, to avoid generation of impacts on the drying procedure due to excessive accumulation of the lint, thereby effectively improving the drying efficiency, reducing energy consumption and extending the product life.

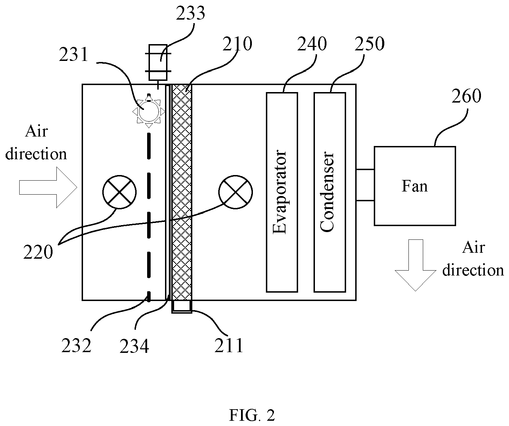

In an optional embodiment, the drying apparatus is shown in FIG. 2, an air intake side of the drying apparatus is provided with a filter screen 210, a respective air pressure sensor 220 is provided on either side of the filter screen 210, and a side of the filter screen 210 facing towards the air intake side is provided with a filter screen cleaning component which includes a brush 231, a slide rail 232, a driving motor 233, and spray nozzles 234. The brush 231 is provided on the slide rail 232, the driving motor 233 is configured to drive the brush 231 to move and/or the slide rail 232 to move, and the driving can be specifically realized by some transmission devices, which is not described herein again. There are multiple spray nozzles 234 and the spray nozzles 234 are configured such that they face different areas of the filter screen respectively, each of the spray nozzles 234 can be controlled individually by means of a valve (only an example in the figure). In addition, the drying apparatus in the present embodiment may further include, but is not limited to, an evaporator 240, a condenser 250, and a fan 260, which are not described in detail herein.

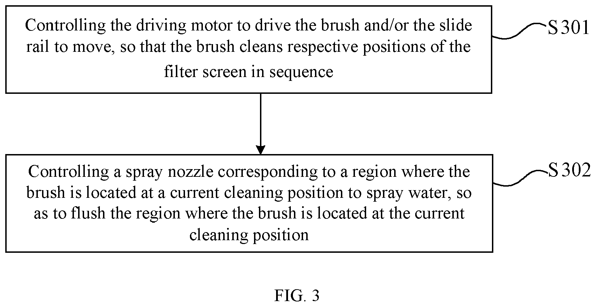

Further, as shown in FIG. 3, S102 at which the filter screen cleaning component is started to clean the filter screen as described in the foregoing embodiment includes the following.

S301, controlling the driving motor to drive the brush and/or the slide rail to move, so that the brush cleans respective positions of the filter screen in sequence.

S302, controlling a spray nozzle corresponding to a region where the brush is located at a current cleaning position to spray water, so as to flush the region where the brush is located at the current cleaning position.

In the present embodiment, since the brush is provided on the slide rail, the cleaning may be performed along the direction of the slide rail when the driving motor drives the brush to move along the slide rail; and when the driving motor drives the slide rail to move, the brush can be driven to perform cleaning along the movement direction of the slide rail, so that the brush can move in a two-direction dimension, that is, the brush can clean respective positions of the filter screen. In addition, when the spray nozzles are controlled to spray water, the current cleaning position of the brush can be determined, and then the spray nozzle corresponding to the region where the brush is located at the current cleaning position can be selected to spray water so as to flush the region.

It should be noted that, in the present embodiment, the execution sequence and the execution times of S301 and S302 are not limited, that is, the flushing may be performed while brushing, or the flushing may be performed first and then the brushing, or the brushing may be performed first and then the flushing, or the brushing and the flushing may be performed alternately for multiple times.

On the basis of the above embodiment, the filter screen cleaning component may further include: a drain line which is connected to a drain pipe of the washing machine, and configured to discharge sewage after the filter screen is flushed.

On the basis of any one of the above embodiments, the method for filter screen cleaning may further include:
after the filter screen is cleaned once, re-controlling air intake of the drying apparatus, detecting, by the air pressure sensor, an air pressure on either side of the filter screen, and obtaining a pressure difference according to air pressures on either sides of the filter screen; and
if the pressure difference is greater than the preset threshold, restarting the filter screen cleaning component to clean the filter screen; or
if the pressure difference is not greater than the preset threshold, ending the cleaning of the filter screen.

In the present embodiment, the cleaning speed required by the filter screen cleaning component to clean the filter screen or the time required for cleaning the filter screen once can be set. The filter screen can be cleaned for multiple times. After each cleaning is ended, the air intake of the drying apparatus is controlled to retest the air pressures. When the pressure difference between the air pressures meets the requirements, the cleaning can be ended. If the pressure difference between the air pressures does not meet the requirements, the cleaning can be performed once again. With the above process, the cleaning efficiency of the filter screen can be effectively improved, and the requirements for ending the cleaning can be quickly met. It should be noted that the preset threshold in the present embodiment may be the same as the preset threshold in S102, and certainly, it can be lower than the preset threshold in S 102, so that a better cleaning effect can be achieved for the filter screen.

On the basis of any one of the above embodiments, in an optional embodiment, S101 at which the air pressure on either side of the filter screen is detected by the air pressure sensor during the air intake process of the drying apparatus as described above may include:
after a user sets a cleaning procedure and a drying procedure, controlling air intake of the drying apparatus before a rinse stage or a drain stage of the cleaning procedure, and detecting, by the air pressure sensor, the air pressure on either side of the filter screen.

In the present embodiment, when the user is in need of cleaning and drying the clothes, the user can set the cleaning and drying procedures in advance, before the drying procedure is executed, that is, in the process of executing the cleaning procedure, the air intake of the drying apparatus is controlled, and the air pressures on either sides of the filter screen are detected. If it is determined that the filter screen needs to be cleaned, the cleaning process of the filter screen can be completed before the drying procedure is executed, to avoid the influence on the execution of the drying procedure. Further, with the consideration that the cleaned lint may contaminate the laundry inside the washing machine, the cleaning process may be performed in the rinse stage or the drain stage, and therefore it is necessary to finish the detection of the air pressures on either sides of the filter screen before the rinse stage or the drain stage of the cleaning procedure, and determine whether the filter screen needs to be cleaned, so that the cleaning process can be performed in the rinse stage or the drain stage when it is determined that the filter screen needs to be cleaned.

Correspondingly, S102 at which the filter screen cleaning component is started to clean the filter screen as described above may include:
in the rinse stage or the drain stage of the cleaning procedure, starting the filter screen cleaning component to clean the filter screen, where the sewage after the filter screen is flushed is discharged from the drain line.

In another optional embodiment, S 101 at which the air pressure on either side of the filter screen is detected by the air pressure sensor during the air intake process of the drying apparatus as described above may include:
after a user sets a drying procedure, detecting, by the air pressure sensor, the air pressure on either side of the filter screen during an air intake stage of the drying procedure.

In the present embodiment, the detection of air pressures on either sides of the filter screen can be carried out in the air intake stage of the drying procedure. Since the drying procedure has the air intake stage, it is not necessary to control the air intake of the drying apparatus separately to detect the air pressures on either sides of the filter screen, which can simplify the control process and play a certain effect of saving energy consumption.

Correspondingly, S102 at which the filter screen cleaning component is started to clean the filter screen as described above includes:
after completion of the drying procedure or in a rinse stage or a drain stage of a next cleaning procedure, starting the filter screen cleaning component to clean the filter screen, where the sewage after the filter screen is flushed is discharged from the drain line.

In the present embodiment, since the detection of the air pressures on either sides of the filter screen can be performed in the air intake stage of the drying procedure, when it is determined that the filter screen needs to be cleaned, the cleaning can be performed at any time after the drying procedure is ended, for example, immediately after completion of the cleaning procedure, or after the user takes out the clothes, or in the rinse stage or the drain stage of a next cleaning process.

In another optional embodiment, S 101 at which the air pressure on either side of the filter screen is detected by the air pressure sensor during the air intake process of the drying apparatus as described above may include:
receiving a cleaning instruction of the filter screen from a user, controlling air intake of the drying apparatus according to the cleaning instruction, and detecting, by the air pressure sensor, the air pressure on either side of the filter screen.

In the present embodiment, when the user is in no need of cleaning and drying, the user may also actively select to clean the filter screen, and the user may trigger a cleaning instruction for the filter screen, for example, a physical button may be set on the washing machine, or a cleaning button may be provided through a touch screen on the washing machine, and the cleaning instruction for the filter screen is triggered by clicking the button. Of course, the cleaning instruction of the filter screen may be issued over voice, or the cleaning instruction of the filter screen may be issued by a remote controller, a mobile terminal, or the like. After receiving the user's cleaning instruction for the filter screen, the air intake of the drying apparatus is controlled, the air pressure on either side of the filter screen is detected by the air pressure sensor, if the pressure difference between the air pressures on either sides of the filter screen is not greater than the preset threshold, the filter screen may not be cleaned, and the user can also be prompted not to clean the filter screen; otherwise, the cleaning process of the filter screen is executed.

Further, since the user has no drying demand at present, in order to avoid that, after cleaning the filter screen, much residual water remains on the filter screen so that the drying apparatus is affected to some extent, such as rust, etc. After the filter screen is cleaned, the air intake of the drying apparatus can be controlled to air-dry the filter screen, so as to ensure that the drying device is dry inside.

According to the method for filter screen cleaning provided in the above embodiment, the automatic cleaning of the filter screen can be realized through the filter screen cleaning component. The user does not need to manually disassemble the filter screen or manually clean the filter screen, which brings convenience to the user. In addition, a proper time for cleaning the filter screen can be determined according to the pressure difference between the air pressures on either sides of the filter screen, to avoid generation of impacts on the drying procedure due to excessive accumulation of the lint, thereby effectively improving the drying efficiency, reducing energy consumption and extending the product life.

On the basis of the above embodiment, the filter screen can be detached, for example, a handle (such as the handle 211 in FIG. 2) can be disposed on the filter screen, and the user can detach the filter screen from the drying apparatus by pulling the handle, so as to facilitate the user to replace and manually clean the filter screen.

Further, when the pressure difference is determined to be greater than the preset threshold, prompt information can be sent to a user to inquire whether the user adopts automatic cleaning or manual cleaning. When the user selects to adopt automatic cleaning, the filter screen is cleaned through the filter screen cleaning component; when the user selects to adopt manual cleaning, the user can detach the filter screen by pulling the handle, and the filter screen is installed on the drying apparatus after manual cleaning.

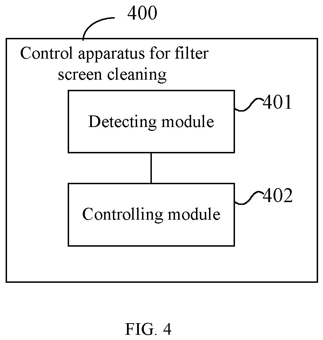

FIG. 4 is a structural diagram of a control apparatus for filter screen cleaning according to an embodiment of the present application. The control apparatus for filter screen cleaning provided in the present embodiment is applied to a washing machine equipped with a drying apparatus, an air intake side of the drying apparatus is provided with a filter screen, a respective air pressure sensor is provided on either side of the filter screen, and a side of the filter screen facing towards the air intake side is provided with a filter screen cleaning component, and the control apparatus for filter screen cleaning can carry out the processing procedure provided in the embodiments of the method for filter screen cleaning. As shown in FIG. 4, the control apparatus for filter screen cleaning 400 includes a detecting module 401 and a controlling module 402.

The detecting module 401 is configured to detect an air pressure on either side of the filter screen via the air pressure sensor during an air intake process of the drying apparatus, and obtain a pressure difference according to air pressures on either sides of the filter screen.

The controlling module 402 is configured to start the filter screen cleaning component to clean the filter screen, if the pressure difference is greater than a preset threshold.

In a possible implementation, the filter screen cleaning component includes a brush, a slide rail, a driving motor and spray nozzles, where the brush is provided on the slide rail, the driving motor is configured to drive the brush to move and/or the slide rail to move, and there are multiple spray nozzles and the spray nozzles are configured such that they face different areas of the filter screen respectively,
the controlling module 402, when starting the filter screen cleaning component to clean the filter screen, is configured to:
control the driving motor to drive the brush and/or the slide rail to move, so that the brush cleans respective positions of the filter screen in sequence; and
control a spray nozzle corresponding to a region where the brush is located at a current cleaning position to spray water, so as to flush the region where the brush is located at the current cleaning position.

In a possible implementation, the filter screen cleaning component further includes: a drain line which is connected to a drain pipe of the washing machine, and configured to discharge sewage after the filter screen is flushed.

In a possible implementation, the controlling module 402 is further configured to:
after the filter screen is cleaned once, re-control air intake of the drying apparatus, control the detecting module 401 to detect an air pressure on either side of the filter screen via the air pressure sensor and to obtain a pressure difference according to air pressures on either sides of the filter screen; and
if the pressure difference is greater than the preset threshold, restart the filter screen cleaning component to clean the filter screen; or
if the pressure difference is not greater than the preset threshold, end the cleaning of the filter screen.

In a possible implementation, the detecting module 401, when detecting the air pressure on either side of the filter screen via the air pressure sensor during the air intake process of the drying apparatus, is configured to:
after a user sets a cleaning procedure and a drying procedure, control air intake of the drying apparatus before a rinse stage or a drain stage of the cleaning procedure, and detect the air pressure on either side of the filter screen via the air pressure sensor, and
the controlling module 402, when starting the filter screen cleaning component to clean the filter screen, is configured to:
   in the rinse stage or the drain stage of the cleaning procedure, start the filter screen cleaning component to clean the filter screen, where the sewage after the filter screen is flushed is discharged from the drain line.

In a possible implementation, the detecting module 401, when detecting the air pressure on either side of the filter screen via the air pressure sensor during the air intake process of the drying apparatus, is configured to:
after a user sets a drying procedure, detect the air pressure on either side of the filter screen via the air pressure sensor during an air intake stage of the drying procedure, and
the controlling module 402, when starting the filter screen cleaning component to clean the filter screen, is configured to:
   after completion of the drying procedure or in a rinse stage or a drain stage of a next cleaning procedure, start the filter screen cleaning component to clean the filter screen, where the sewage after the filter screen is flushed is discharged from the drain line.

In a possible implementation, the detecting module 401, when detecting the air pressure on either side of the filter screen via the air pressure sensor during the air intake process of the drying apparatus, is configured to:
receive a cleaning instruction of the filter screen from a user, control air intake of the drying apparatus according to the cleaning instruction, and detect the air pressure on either side of the filter screen via the air pressure sensor, and
the controlling module 402, after completion of the cleaning of filter screen, is further configured to:
   control air intake of the drying apparatus, so as to air-dry the filter screen.

The control apparatus for filter screen cleaning provided in the embodiments of the present application may be specifically configured to execute the method embodiments provided in FIG. 1 or FIG. 3, and its specific functions are not described herein again.

According to the control apparatus for filter screen cleaning provided in the embodiments of the present application, during an air intake process of a drying apparatus, an air pressure on either side of a filter screen is detected by an air pressure sensor, and a pressure difference is obtained according to air pressures on either sides of the filter screen. If the pressure difference is greater than a preset threshold, a filter screen cleaning component is started to clean the filter screen. According to the present embodiment, the automatic cleaning of the filter screen can be realized through the filter screen cleaning component. The user does not need to manually disassemble the filter screen or manually clean the filter screen, which brings convenience to the user. In addition, a proper time for cleaning the filter screen can be determined according to the pressure difference between the air pressures on either sides of the filter screen, to avoid generation of impacts on the drying procedure due to excessive accumulation of the lint, thereby effectively improving the drying efficiency, reducing energy consumption and extending the product life.

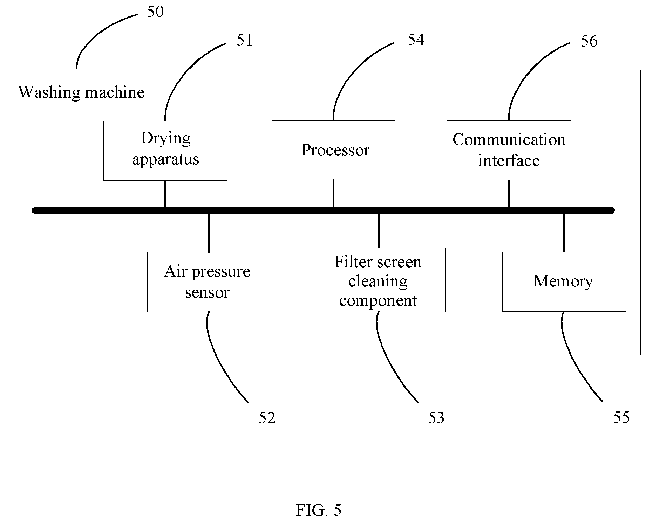

FIG. 5 is a schematic structural diagram of a washing machine according to an embodiment of the present application. As shown in FIG. 5, the washing machine 50 provided in the embodiment of the present application is equipped with a drying apparatus 51, where an air intake side of the drying apparatus is provided with a filter screen, a respective air pressure sensor 52 is provided on either side of the filter screen, and a side of the filter screen facing towards the air intake side is provided with a filter screen cleaning component 53. The washing machine 50 further includes a processor 54, a memory 55, and a computer program; where the computer program is stored in the memory 55 and configured to be executed by the processor 54 for the method for filter screen cleaning as described in the above embodiments. The above components may be connected by a bus, and the washing machine 50 may further include a communication interface 56 for receiving control commands.

The washing machine of the embodiment shown in FIG. 5 can be used for implementing the technical solution of the above method embodiments, and the implementation principle and technical effect are similar, and are not described herein again.

In addition, the present embodiment also provides a computer-readable storage medium on which a computer program is stored. The computer program, when executed by a processor, implements the method for filter screen cleaning as described in the above embodiments.

In addition, the present embodiment also provides a computer program product including a computer program. The computer program, when executed by a processor, implements the method for filter screen cleaning as described in the above embodiments.

In the embodiments provided in the present application, it should be understood that the disclosed apparatus and method may be implemented in other ways. For example, the above-described apparatus embodiments are merely illustrative, and for example, the division of the units is only a logical division, and other divisions may be realized in practice, for example, a plurality of units or components may be combined or integrated into another system, or some features may be omitted, or not executed. In addition, the shown or discussed mutual coupling or direct coupling or communication connection may be an indirect coupling or communication connection through some interfaces, devices or units, and may be in an electrical, mechanical or other form.

The units described as separate parts may or may not be physically separate, and parts displayed as units may or may not be physical units, that is, they may be located in one place, or may be distributed on a plurality of network units. Some or all of the units can be selected according to actual needs to achieve the purpose of the solution of the present embodiments.

In addition, functional units in the embodiments of the present application may be integrated into one processing unit, or each unit may exist alone physically, or two or more units are integrated into one unit. The integrated unit can be realized in a form of hardware, or in a form of hardware plus a software functional unit.

The integrated unit implemented in the form of a software functional unit may be stored in a computer-readable storage medium. The software functional unit is stored in a storage medium and includes several instructions to enable a computer device (which may be a personal computer, a server, or a network device) or a processor (processor) to execute some steps of the methods described in the embodiments of the present application. In addition, the aforementioned storage medium includes: a USB flash disk, a mobile hard disk, a read-only memory (Read-Only Memory, ROM), a random access memory (Random Access Memory, RAM), a magnetic disk or an optical disk and other media on which program codes can be stored.

It is obvious to those skilled in the art that, for convenience and simplicity of description, the foregoing division of the functional modules is merely used as an example, and in practical applications, the above functions may be assigned to different functional modules for execution, as needed, that is, the internal structure of the device is divided into different functional modules to perform all or part of the above described functions. For the specific working process of the device described above, reference may be made to the corresponding process in the foregoing method embodiment, which is not described herein again.

Finally, it should be noted that: the above embodiments are only used for illustrating the technical solutions of the embodiments of the present application, and are not limited thereto; although embodiments of the present application have been described in detail with reference to the foregoing embodiments, those skilled in the art will understand that: the technical solutions described in the foregoing embodiments may still be modified, and the modifications or the substitutions do not make the essence of the corresponding technical solutions depart from the scope of the technical solutions of the embodiments of the present invention.

## Claims

1. A method for filter screen cleaning, **characterized in that** the method is applied to a washing machine (50) equipped with a drying apparatus (51), an air intake side of the drying apparatus (51) is provided with a filter screen (210), a respective air pressure sensor (52) is provided on either side of the filter screen (210), and a side of the filter screen (210) facing towards the air intake side is provided with a filter screen cleaning component (53), and the method comprises:
detecting (S101), by the air pressure sensor (52), an air pressure on either side of the filter screen (210) during an air intake process of the drying apparatus (51), and obtaining a pressure difference according to air pressures on either sides of the filter screen (210); and starting (S102) the filter screen cleaning component (53) to clean the filter screen (210), if the pressure difference is greater than a preset threshold.

2. The method according to claim **1,** wherein the filter screen cleaning component (53) comprises: a brush (231), a slide rail (232), a driving motor (233), and spray nozzles (234), wherein the brush (231) is provided on the slide rail (232), the driving motor (233) is configured to drive the brush (231) and/or the slide rail (232) to move, and there are multiple spray nozzles (234) configured such that they face different areas of the filter screen (210) respectively,
the starting the filter screen cleaning component (53) to clean the filter screen (210) comprises:
controlling (S301) the driving motor (233) to drive the brush (231) and/or the slide rail (232) to move, so that the brush (231) cleans respective positions of the filter screen (210) in sequence; and
controlling (S302) a spray nozzle (234) corresponding to a region in which the brush (231) is located at a current cleaning position to spray water, so as to flush the region in which the brush (231) is located at the current cleaning position.

3. The method according to claim 1 or 2, wherein the filter screen cleaning component (53) further comprises: a drain line connected to a drain pipe of the washing machine (50), and configured to discharge sewage after the filter screen (210) is flushed.

4. The method according to any one of claims 1 to 3, further comprising: after the filter screen (210) is cleaned once, re-controlling air intake of the drying apparatus (51), detecting, by the air pressure sensor (52), an air pressure on either side of the filter screen (210), and obtaining a pressure difference according to air pressures on either sides of the filter screen (210); and if the pressure difference is greater than the preset threshold, restarting the filter screen cleaning component (53) to clean the filter screen (210); or if the pressure difference is not greater than the preset threshold, ending the cleaning of the filter screen (210).

5. The method according to claim 3, wherein the detecting, by the air pressure sensor (52), the air pressure on either side of the filter screen (210) during the air intake process of the drying apparatus (51) comprises:
after a user sets a cleaning procedure and a drying procedure, controlling air intake of the drying apparatus (51) before a rinse stage or a drain stage of the cleaning procedure, and detecting, by the air pressure sensor (52), the air pressure on either side of the filter screen (210); and
the starting the filter screen cleaning component (53) to clean the filter screen (210) comprises:
in the rinse stage or the drain stage of the cleaning procedure, starting the filter screen cleaning component (53) to clean the filter screen (210), wherein the sewage after the filter screen (210) is flushed is discharged from the drain line.

6. The method according to claim 3, wherein the detecting, by the air pressure sensor (52), the air pressure on either side of the filter screen (210) during the air intake process of the drying apparatus (51) comprises:
after a user sets a drying procedure, detecting, by the air pressure sensor (52), the air pressure on either side of the filter screen (210) during an air intake stage of the drying procedure; and
the starting the filter screen cleaning component (53) to clean the filter screen (210) comprises:
after completion of the drying procedure or in a rinse stage or a drain stage of a next cleaning procedure, starting the filter screen cleaning component (53) to clean the filter screen (210), wherein the sewage after the filter screen (210) is flushed is discharged from the drain line.

7. The method according to claim 3, wherein the detecting, by the air pressure sensor (52), the air pressure on either side of the filter screen (210) during the air intake process of the drying apparatus (51) comprises:
receiving a cleaning instruction for the filter screen (210) from a user, controlling air intake of the drying apparatus (51) according to the cleaning instruction, and detecting, by the air pressure sensor (52), the air pressure on either side of the filter screen (210); and after completion of the cleaning of the filter screen (210), the method further comprises:
controlling air intake of the drying apparatus (51), so as to air-dry the filter screen (210).

8. A control apparatus for filter screen cleaning (400), **characterized in that** the apparatus is applied to a washing machine equipped with a drying apparatus, an air intake side of the drying apparatus is provided with a filter screen, a respective air pressure sensor is provided on either side of the filter screen, and a side of the filter screen facing towards the air intake side is provided with a filter screen cleaning component, and the apparatus comprises:
a detecting module (401), configured to detect an air pressure on either side of the filter screen via the air pressure sensor during an air intake process of the drying apparatus, and obtain a pressure difference according to air pressures on either sides of the filter screen; and
a controlling module (402), configured to start the filter screen cleaning component to clean the filter screen, if the pressure difference is greater than a preset threshold.

9. The apparatus (400) according to claim 8, wherein the filter screen cleaning component (53) comprises a brush (231), a slide rail (232), a driving motor (233), and spray nozzles (234), wherein the brush (231) is provided on the slide rail (232), the driving motor (233) is configured to drive the brush (231) to move and/or the slide rail (232) to move, and there are multiple spray nozzles (234) configured such that they face different areas of the filter screen (210) respectively, the controlling module (402), when starting the filter screen cleaning component (53) to clean the filter screen (210), is configured to:
control the driving motor (233) to drive the brush (231) and/or the slide rail (232) to move, so that the brush (231) cleans respective positions of the filter screen (210) in sequence; and
control a spray nozzle (234) corresponding to a region in which the brush (231) is located at a current cleaning position to spray water, so as to flush the region in which the brush (231) is located at the current cleaning position.

10. A filter screen cleaning component (53), **characterized in that** the filter screen cleaning component (53) is provided on a side of a filter screen (210) facing towards an air intake side, and is configured to clean the filter screen (210) under the control of the apparatus (400) according to claim 8 or 9, wherein the filter screen (210) is provided on the air intake side of a drying apparatus (51) of a washing machine (50), the filter screen cleaning component (53) comprises: a brush (231), a slide rail (232), a driving motor (233), and spray nozzles (234), wherein the brush (231) is provided on the slide rail (232), the driving motor (233) is configured to drive the brush (231) to move and/or the slide rail (232) to move, so that the brush (231) cleans respective positions of the filter screen (210) in sequence, and there are multiple spray nozzles (234) configured such that they face different areas of the filter screen (210) respectively, and a spray nozzle (234) corresponding to a region in which the brush (231) is located at a current cleaning position is configured to flush the region in which the brush (231) is located at the current cleaning position.

11. The filter screen cleaning component (53) according to claim 10, further comprising a drain line which is connected to a drain pipe of the washing machine (50), and is configured to discharge sewage after the filter screen (210) is flushed.

12. A drying apparatus (51), **characterized in that** the drying apparatus (51) is provided in a washing machine (50), an air intake side of the drying apparatus (51) is provided with a filter screen (210), a respective air pressure sensor (52) is provided on either side of the filter screen (210), and a side of the filter screen (210) facing towards the air intake side is provided with the filter screen cleaning component (53) according to claim 10 or 11.

13. A washing machine (50), **characterized in that** the washing machine (50) is equipped with a drying apparatus (51), an air intake side of the drying apparatus (51) is provided with a filter screen, a respective air pressure sensor (52) is provided on either side of the filter screen, and a side of the filter screen facing towards the air intake side is provided with a filter screen cleaning component (53) according to claim 10 or 11, and the washing machine (50) further comprises: a memory (55) configured to store a computer program; and a processor (54) configured to execute the computer program stored in the memory (55) to implement the method according any one of claims 1 to 7.

14. A computer-readable storage medium, **characterized by** comprising instructions to cause the washing machine (50) according to claim 13 to execute the steps of the method according to any one of claims 1 to 7.

15. A computer program product, **characterized by** comprising instructions to cause the washing machine (50) according to claim 13 to execute the steps of the method according to any one of claims 1 to 7.

## Patentansprüche

1. Verfahren zur Filternetzreinigung, **dadurch gekennzeichnet, dass** das Verfahren auf eine Waschmaschine (50) angewendet wird, die mit einer Trocknungsvorrichtung (51) ausgestattet ist, eine Lufteinlassseite der Trocknungsvorrichtung (51) mit einem Filternetz (210) bereitgestellt ist, ein entsprechender Luftdrucksensor (52) auf jeder Seite des Filternetzes (210) bereitgestellt ist und eine Seite des Filternetzes (210), die der Lufteinlassseite zugewandt ist, mit einer Filternetzreinigungskomponente (53) bereitgestellt ist, und das Verfahren Folgendes umfasst:
Detektieren (S101), durch den Luftdrucksensor (52), eines Luftdrucks auf beiden Seiten des Filternetzes (210) während eines Lufteinlassprozesses der Trocknungsvorrichtung (51) und Erlangen einer Druckdifferenz gemäß Luftdrücken auf beiden Seiten des Filternetzes (210); und Starten (S102) der Filternetzreinigungskomponente (53), um das Filternetz (210) zu reinigen, wenn die Druckdifferenz größer als ein voreingestellter Schwellenwert ist.

2. Verfahren nach Anspruch 1, wobei die Filternetzreinigungskomponente (53) Folgendes umfasst: eine Bürste (231), eine Gleitschiene (232), einen Antriebsmotor (233) und Sprühdüsen (234), wobei die Bürste (231) an der Gleitschiene (232) bereitgestellt ist, der Antriebsmotor (233) dazu konfiguriert ist, die Bürste (231) und/oder die Gleitschiene (232) anzutreiben, um sich zu bewegen, und es mehrere Sprühdüsen (234) gibt, die dazu konfiguriert sind, sich zu bewegen, sodass sie jeweils unterschiedlichen Bereichen des Filternetzes (210) zugewandt sind,
das Starten der Filternetzreinigungskomponente (53) zum Reinigen des Filternetzes (210) Folgendes umfasst:
Steuern (S301) des Antriebsmotors (233), um die Bürste (231) und/oder die Gleitschiene (232) anzutreiben, um sich zu bewegen, sodass die Bürste (231) jeweilige Positionen des Filternetzes (210) nacheinander reinigt; und
Steuern (S302) einer Sprühdüse (234), die einem Bereich entspricht, in dem sich die Bürste (231) an einer aktuellen Reinigungsposition befindet, um Wasser zu sprühen, um den Bereich, in dem sich die Bürste (231) an der aktuellen Reinigungsposition befindet, durchzuspülen.

3. Verfahren nach Anspruch 1 oder 2, wobei die Filternetzreinigungskomponente (53) ferner Folgendes umfasst: eine Abflussleitung, die mit einem Abflussrohr der Waschmaschine (50) verbunden ist und dazu konfiguriert ist, Abwasser abzulassen, nachdem das Filternetz (210) durchgespült wurde.

4. Verfahren nach einem der Ansprüche 1 bis 3, ferner umfassend: nachdem das Filternetz (210) einmal gereinigt wurde, erneutes Steuern des Lufteinlasses der Trocknungsvorrichtung (51), Detektieren, durch den Luftdrucksensor (52), eines Luftdrucks auf beiden Seiten des Filternetzes (210) und Erlangen einer Druckdifferenz gemäß Luftdrücken auf beiden Seiten des Filternetzes (210); und, falls die Druckdifferenz größer als der voreingestellte Schwellenwert ist, erneutes Starten der Filternetzreinigungskomponente (53), um das Filternetz (210) zu reinigen; oder, falls die Druckdifferenz nicht größer als der voreingestellte Schwellenwert ist, Beenden des Reinigens des Filternetzes (210).

5. Verfahren nach Anspruch 3, wobei das Detektieren, durch den Luftdrucksensor (52), des Luftdrucks auf beiden Seiten des Filternetzes (210) während des Lufteinlassprozesses der Trocknungsvorrichtung (51) Folgendes umfasst:
nachdem ein Benutzer einen Reinigungsvorgang und einen Trocknungsvorgang einstellt, Steuern eines Lufteinlasses der Trocknungsvorrichtung (51) vor einer Spülstufe oder einer Abflussstufe des Reinigungsvorgangs und Detektieren, durch den Luftdrucksensor (52), des Luftdrucks auf beiden Seiten des Filternetzes (210); und
das Starten der Filternetzreinigungskomponente (53) zum Reinigen des Filternetzes (210) Folgendes umfasst:
in der Spülstufe oder der Abflussstufe des Reinigungsvorgangs, Starten der Filternetzreinigungskomponente (53) zum Reinigen des Filternetzes (210), wobei das Abwasser, nachdem das Filternetz (210) durchgespült wurde, aus der Abflussleitung abgelassen wird.

6. Verfahren nach Anspruch 3, wobei das Detektieren, durch den Luftdrucksensor (52), des Luftdrucks auf beiden Seiten des Filternetzes (210) während des Lufteinlassprozesses der Trocknungsvorrichtung (51) Folgendes umfasst:
nachdem ein Benutzer einen Trocknungsvorgang einstellt, Detektieren, durch den Luftdrucksensor (52), des Luftdrucks auf beiden Seiten des Filternetzes (210) während einer Lufteinlassstufe des Trocknungsvorgangs; und
das Starten der Filternetzreinigungskomponente (53) zum Reinigen des Filternetzes (210) Folgendes umfasst:
nach Abschluss des Trocknungsverfahrens oder in einer Spülstufe oder einer Abflussstufe eines nächsten Reinigungsvorgangs, Starten der Filternetzreinigungskomponente (53) zum Reinigen des Filternetzes (210), wobei das Abwasser, nachdem das Filternetz (210) durchgespült wurde, aus der Abflussleitung abgelassen wird.

7. Verfahren nach Anspruch 3, wobei das Detektieren, durch den Luftdrucksensor (52), des Luftdrucks auf beiden Seiten des Filternetzes (210) während des Lufteinlassprozesses der Trocknungsvorrichtung (51) Folgendes umfasst:
Empfangen einer Reinigungsanweisung für das Filternetz (210) von einem Benutzer, Steuern des Lufteinlasses der Trocknungsvorrichtung (51) gemäß der Reinigungsanweisung und Detektieren, durch den Luftdrucksensor (52), des Luftdrucks auf beiden Seiten des Filternetzes (210); und nach Abschluss des Reinigens des Filternetzes (210) das Verfahren ferner Folgendes umfasst:
Steuern des Lufteinlasses der Trocknungsvorrichtung (51), um das Filternetz (210) luftzutrocknen.

8. Steuervorrichtung zur Filternetzreinigung (400), **dadurch gekennzeichnet, dass** das Verfahren auf eine Waschmaschine angewendet wird, die mit einer Trocknungsvorrichtung ausgestattet ist, eine Lufteinlassseite der Trocknungsvorrichtung mit einem Filternetz bereitgestellt ist, ein entsprechender Luftdrucksensor auf jeder Seite des Filternetzes bereitgestellt ist und eine Seite des Filternetzes, die der Lufteinlassseite zugewandt ist, mit einer Filternetzreinigungskomponente bereitgestellt ist, und die Vorrichtung Folgendes umfasst:
ein Detektionsmodul (401), das dazu konfiguriert ist, einen Luftdruck auf beiden Seiten des Filternetzes über den Luftdrucksensor während eines Lufteinlassprozesses der Trocknungsvorrichtung zu detektieren und eine Druckdifferenz gemäß Luftdrücken auf beiden Seiten des Filternetzes zu erlangen; und
ein Steuermodul (402), das dazu konfiguriert ist, die Filternetzreinigungskomponente zu starten, um das Filternetz zu reinigen, wenn die Druckdifferenz größer als ein voreingestellter Schwellenwert ist.

9. Vorrichtung (400) nach Anspruch 8, wobei die Filternetzreinigungskomponente (53) eine Bürste (231), eine Gleitschiene (232), einen Antriebsmotor (233) und Sprühdüsen (234) umfasst, wobei die Bürste (231) an der Gleitschiene (232) bereitgestellt ist, der Antriebsmotor (233) dazu konfiguriert ist, die Bürste (231) anzutreiben, um sich zu bewegen, und/oder die Gleitschiene (232) anzutreiben, um sich zu bewegen, und es mehrere Sprühdüsen (234) gibt, die derart konfiguriert sind, dass sie jeweils unterschiedlichen Bereichen des Filternetzes (210) zugewandt sind, wobei das Steuermodul (402) beim Starten der Filternetzreinigungskomponente (53), um das Filternetz (210) zu reinigen, zu Folgendem konfiguriert ist:
Steuern des Antriebsmotors (233), um die Bürste (231) und/oder die Gleitschiene (232) anzutreiben, um sich zu bewegen, sodass die Bürste (231) jeweilige Positionen des Filternetzes (210) nacheinander reinigt; und
Steuern einer Sprühdüse (234), die einem Bereich entspricht, in dem sich die Bürste (231) an einer aktuellen Reinigungsposition befindet, um Wasser zu sprühen, um den Bereich, in dem sich die Bürste (231) an der aktuellen Reinigungsposition befindet, durchzuspülen.

10. Filternetzreinigungskomponente (53), **dadurch gekennzeichnet, dass** die Filternetzreinigungskomponente (53) auf einer Seite eines Filternetzes (210) bereitgestellt ist, die einer Lufteinlassseite zugewandt ist, und dazu konfiguriert ist, das Filternetz (210) unter der Steuerung der Vorrichtung (400) nach Anspruch 8 oder 9 zu reinigen, wobei das Filternetz (210) auf der Lufteinlassseite einer Trocknungsvorrichtung (51) einer Waschmaschine (50) bereitgestellt ist, wobei die Filternetzreinigungskomponente (53) Folgendes umfasst: eine Bürste (231), einen Gleitschiene (232), einen Antriebsmotor (233) und Sprühdüsen (234), wobei die Bürste (231) auf der Gleitschiene (232) bereitgestellt ist, der Antriebsmotor (233) dazu konfiguriert ist, die Bürste (231) anzutreiben, um sich zu bewegen, und/oder die Gleitschiene (232) anzutreiben, um sich zu bewegen, sodass die Bürste (231) jeweilige Positionen des Filternetzes (210) nacheinander reinigt, und es mehrere Sprühdüsen (234) gibt, die derart konfiguriert sind, dass sie jeweils unterschiedlichen Bereichen des Filternetzes (210) zugewandt sind, und eine Sprühdüse (234), die einem Bereich entspricht, in dem sich die Bürste (231) an einer aktuellen Reinigungsposition befindet, dazu konfiguriert ist, den Bereich, in dem sich die Bürste (231) an der aktuellen Reinigungsposition befindet, durchzuspülen.

11. Filternetzreinigungskomponente (53) nach Anspruch 10, ferner umfassend eine Abflussleitung, die mit einem Abflussrohr der Waschmaschine (50) verbunden ist und dazu konfiguriert ist, Abwasser abzulassen, nachdem das Filternetz (210) durchgespült wurde.

12. Trocknungsvorrichtung (51), **dadurch gekennzeichnet, dass** die Trocknungsvorrichtung (51) in einer Waschmaschine (50) bereitgestellt ist, eine Lufteinlassseite der Trocknungsvorrichtung (51) mit einem Filternetz (210) bereitgestellt ist, ein jeweiliger Luftdrucksensor (52) auf beiden Seiten des Filternetzes (210) bereitgestellt ist und eine Seite des Filternetzes (210), die der Lufteinlassseite zugewandt ist, mit der Filternetzreinigungskomponente (53) nach Anspruch 10 oder 11 bereitgestellt ist.

13. Waschmaschine (50), **dadurch gekennzeichnet, dass** die Waschmaschine (50) mit einer Trocknungsvorrichtung (51) ausgestattet ist, eine Lufteinlassseite der Trocknungsvorrichtung (51) mit einem Filternetz bereitgestellt ist, ein jeweiliger Luftdrucksensor (52) auf jeder Seite des Filternetzes bereitgestellt ist und eine Seite des Filternetzes, die der Lufteinlassseite zugewandt ist, mit einer Filternetzreinigungskomponente (53) nach Anspruch 10 oder 11 bereitgestellt ist, und die Waschmaschine (50) ferner Folgendes umfasst: einen Speicher (55), der dazu konfiguriert ist, ein Computerprogramm zu speichern; und einen Prozessor (54), der dazu konfiguriert ist, das in dem Speicher (55) gespeicherte Computerprogramm auszuführen, um das Verfahrens nach einem der Ansprüche 1 bis 7 umzusetzen.

14. Computerlesbares Speichermedium, **dadurch gekennzeichnet, dass** es Anweisungen umfasst, um die Waschmaschine (50) nach Anspruch 13 dazu zu veranlassen, die Schritte des Verfahrens nach einem der Ansprüche 1 bis 7 auszuführen.

15. Computerprogrammprodukt, **dadurch gekennzeichnet, dass** es Anweisungen umfasst, um die Waschmaschine (50) nach Anspruch 13 dazu zu veranlassen, die Schritte des Verfahrens nach einem der Ansprüche 1 bis 7 auszuführen.

## Revendications

1. Procédé de nettoyage de tamis filtrant, **caractérisé en ce que** le procédé est appliqué à une machine à laver (50) équipée d'un appareil de séchage (51), un côté d'admission d'air de l'appareil de séchage (51) est pourvu d'un tamis filtrant (210), un capteur de pression d'air respectif (52) est prévu de chaque côté du tamis filtrant (210), et un côté du tamis filtrant (210) faisant face vers le côté d'admission d'air est pourvu d'un composant de nettoyage de tamis filtrant (53), et le procédé comprend :
la détection (S101), par le capteur de pression d'air (52), d'une pression d'air de chaque côté du tamis filtrant (210) pendant un processus d'admission d'air de l'appareil de séchage (51), et l'obtention d'une différence de pression en fonction des pressions d'air de chaque côté du tamis filtrant (210) ; et le démarrage (S102) du composant de nettoyage de tamis filtrant (53) pour nettoyer le tamis filtrant (210), si la différence de pression est supérieure à un seuil prédéfini.

2. Procédé selon la revendication 1, dans lequel le composant de nettoyage de tamis filtrant (53) comprend : une brosse (231), un rail coulissant (232), un moteur d'entraînement (233) et des buses de pulvérisation (234), dans lequel la brosse (231) est prévue sur le rail coulissant (232), le moteur d'entraînement (233) est configuré pour entraîner la brosse (231) et/ou le rail coulissant (232) à se déplacer, et il existe de multiples buses de pulvérisation (234) configurées de sorte qu'elles soient respectivement en face de différentes zones du tamis filtrant (210),
le démarrage du composant de nettoyage de tamis filtrant (53) pour nettoyer le tamis filtrant (210) comprend :
la commande (S301) du moteur d'entraînement (233) pour entraîner la brosse (231) et/ou le rail coulissant (232) à se déplacer, de sorte que la brosse (231) nettoie des positions respectives du tamis filtrant (210) en séquence ; et
la commande (S302) d'une buse de pulvérisation (234) correspondant à une région dans laquelle la brosse (231) est située à une position de nettoyage actuelle pour pulvériser de l'eau, de manière à rincer la région dans laquelle la brosse (231) est située à la position de nettoyage actuelle.

3. Procédé selon la revendication 1 ou 2, dans lequel le composant de nettoyage de tamis filtrant (53) comprend en outre : une conduite de vidange reliée à une canalisation de vidange de la machine à laver (50), et configurée pour évacuer les eaux usées après le rinçage du tamis filtrant (210).

4. Procédé selon l'une quelconque des revendications 1 à 3, comprenant en outre : après que le tamis filtrant (210) est nettoyé une fois, la commande de nouveau de l'admission d'air de l'appareil de séchage (51), la détection, par le capteur de pression d'air (52), d'une pression d'air de chaque côté du tamis filtrant (210), et l'obtention d'une différence de pression en fonction des pressions d'air de chaque côté du tamis filtrant (210) ; et si la différence de pression est supérieure au seuil prédéfini, le redémarrage du composant de nettoyage de tamis filtrant (53) pour nettoyer le tamis filtrant (210) ; ou si la différence de pression n'est pas supérieure au seuil prédéfini, la cessation du nettoyage du tamis filtrant (210).

5. Procédé selon la revendication 3, dans lequel la détection, par le capteur de pression d'air (52), de la pression d'air de chaque côté du tamis filtrant (210) pendant le processus d'admission d'air de l'appareil de séchage (51) comprend :
après qu'un utilisateur a défini une procédure de nettoyage et une procédure de séchage, la commande de l'admission d'air de l'appareil de séchage (51) avant une étape de rinçage ou une étape de vidange de la procédure de nettoyage, et la détection, par le capteur de pression d'air (52), la pression d'air de chaque côté du tamis filtrant (210) ; et
le démarrage du composant de nettoyage de tamis filtrant (53) pour nettoyer le tamis filtrant (210) comprend :
dans l'étape de rinçage ou l'étape de vidange de la procédure de nettoyage, le démarrage du composant de nettoyage de tamis filtrant (53) pour nettoyer le tamis filtrant (210), dans lequel les eaux usées après le rinçage du tamis filtrant (210), sont évacuées à partir de la conduite de vidange.

6. Procédé selon la revendication 3, dans lequel la détection, par le capteur de pression d'air (52), de la pression d'air de chaque côté du tamis filtrant (210) pendant le processus d'admission d'air de l'appareil de séchage (51) comprend :
après qu'un utilisateur a défini une procédure de séchage, la détection, par le capteur de pression d'air (52), de la pression d'air de chaque côté du tamis filtrant (210) pendant une étape d'admission d'air de la procédure de séchage ; et
le démarrage du composant de nettoyage de tamis filtrant (53) pour nettoyer le tamis filtrant (210) comprend :
après l'achèvement de la procédure de séchage ou dans une étape de rinçage ou une étape de vidange d'une procédure de nettoyage suivante, le démarrage du composant de nettoyage de tamis filtrant (53) pour nettoyer le tamis filtrant (210), dans lequel les eaux usées après le rinçage du tamis filtrant (210) sont évacuées à partir de la conduite de vidange.

7. Procédé selon la revendication 3, dans lequel la détection, par le capteur de pression d'air (52), de la pression d'air de chaque côté du tamis filtrant (210) pendant le processus d'admission d'air de l'appareil de séchage (51) comprend :
la réception d'une instruction de nettoyage du tamis filtrant (210) de la part d'un utilisateur, la commande de l'admission d'air de l'appareil de séchage (51) selon l'instruction de nettoyage, et la détection, par le capteur de pression d'air (52), de la pression d'air de chaque côté du tamis filtrant (210) ; et après l'achèvement du nettoyage du tamis filtrant (210), le procédé comprend en outre :
la commande de l'admission d'air de l'appareil de séchage (51), de manière à sécher à l'air le tamis filtrant (210).

8. Appareil de commande pour le nettoyage d'un tamis filtrant (400), **caractérisé en ce que** l'appareil est appliqué à une machine à laver équipée d'un appareil de séchage, un côté d'admission d'air de l'appareil de séchage est pourvu d'un tamis filtrant, un capteur de pression d'air respectif est prévu de chaque côté du tamis filtrant, et un côté du tamis filtrant faisant face vers le côté d'admission d'air est pourvu d'un composant de nettoyage de tamis filtrant, et l'appareil comprend :
un module de détection (401), configuré pour détecter une pression d'air de chaque côté du tamis filtrant par l'intermédiaire du capteur de pression d'air pendant un processus d'admission d'air de l'appareil de séchage, et obtenir une différence de pression en fonction des pressions d'air de chaque côté du tamis filtrant ; et
un module de commande (402), configuré pour démarrer le composant de nettoyage de tamis filtrant afin de nettoyer le tamis filtrant, si la différence de pression est supérieure à un seuil prédéfini.

9. Appareil (400) selon la revendication 8, dans lequel le composant de nettoyage de tamis filtrant (53) comprend une brosse (231), un rail coulissant (232), un moteur d'entraînement (233) et des buses de pulvérisation (234), dans lequel la brosse (231) est prévue sur le rail coulissant (232), le moteur d'entraînement (233) est configuré pour entraîner la brosse (231) à se déplacer et/ou le rail coulissant (232) à se déplacer, et il existe de multiples buses de pulvérisation (234) configurées de sorte qu'elles soient respectivement en face de différentes zones du tamis filtrant (210), le module de commande (402), lors du démarrage du composant de nettoyage de tamis filtrant (53) pour nettoyer le tamis filtrant (210), est configuré pour :
commander le moteur d'entraînement (233) pour entraîner la brosse (231) et/ou le rail coulissant (232) à se déplacer, de sorte que la brosse (231) nettoie des positions respectives du tamis filtrant (210) en séquence ; et
commander une buse de pulvérisation (234) correspondant à une région dans laquelle la brosse (231) est située à une position de nettoyage actuelle pour pulvériser de l'eau, de manière à rincer la région dans laquelle la brosse (231) est située à la position de nettoyage actuelle.

10. Composant de nettoyage de tamis filtrant (53), **caractérisé en ce que** le composant de nettoyage de tamis filtrant (53) est prévu sur un côté d'un tamis filtrant (210) faisant face à un côté d'admission d'air, et est configuré pour nettoyer le tamis filtrant (210) sous la commande de l'appareil (400) selon la revendication 8 ou 9, dans lequel le tamis filtrant (210) est prévu sur le côté d'admission d'air d'un appareil de séchage (51) d'une machine à laver (50), le composant de nettoyage de tamis filtrant (53) comprenant : une brosse (231), un rail coulissant (232), un moteur d'entraînement (233) et des buses de pulvérisation (234), dans lequel la brosse (231) est prévue sur le rail coulissant (232), le moteur d'entraînement (233) est configuré pour entraîner la brosse (231) à se déplacer et/ou le rail coulissant (232) à se déplacer, de sorte que la brosse (231) nettoie des positions respectives du tamis filtrant (210) en séquence, et il existe plusieurs buses de pulvérisation (234) configurés de sorte qu'ils soient respectivement en face de différentes zones du tamis filtrant (210), et une buse de pulvérisation (234) correspondant à une région dans laquelle la brosse (231) est située à une position de nettoyage actuelle est configurée pour rincer la région dans laquelle la brosse (231) est située à la position de nettoyage actuelle.

11. Composant de nettoyage de tamis filtrant (53) selon la revendication 10, comprenant en outre une conduite de vidange qui est reliée à une canalisation de vidange de la machine à laver (50), et est configurée pour évacuer les eaux usées après le rinçage du tamis filtrant (210).

12. Appareil de séchage (51), **caractérisé en ce que** l'appareil de séchage (51) est prévu dans une machine à laver (50), un côté d'admission d'air de l'appareil de séchage (51) est pourvu d'un tamis filtrant (210), un capteur de pression d'air respectif (52) est prévu de chaque côté du tamis filtrant (210), et un côté du tamis filtrant (210) faisant face vers le côté d'admission d'air est pourvu du composant de nettoyage de tamis filtrant (53) selon la revendication 10 ou 11.

13. Machine à laver (50), **caractérisée en ce que** la machine à laver (50) est équipée d'un appareil de séchage (51), un côté d'admission d'air de l'appareil de séchage (51) est pourvu d'un tamis filtrant, un capteur de pression d'air respectif (52) est prévu de chaque côté du tamis filtrant, et un côté du tamis filtrant faisant face vers le côté d'admission d'air est pourvu d'un composant de nettoyage de tamis filtrant (53) selon la revendication 10 ou 11, et la machine à laver (50) comprend en outre : une mémoire (55) configurée pour stocker un programme informatique ; et un processeur (54) configuré pour exécuter le programme informatique stocké dans la mémoire (55) pour mettre en œuvre le procédé selon l'une quelconque des revendications 1 **à** 7.

14. Support de stockage lisible par ordinateur, **caractérisé en ce qu'**il comprend des instructions pour amener la machine à laver (50) selon la revendication 13 à exécuter les étapes du procédé selon l'une quelconque des revendications 1 à 7.

15. Produit de programme informatique, **caractérisé en ce qu'**il comprend des instructions pour amener la machine à laver (50) selon la revendication 13 à exécuter les étapes du procédé selon l'une quelconque des revendications 1 à 7.
